# EUROPEAN PATENT APPLICATION

(11) **EP 1 347 625 A2**
(43) Date of publication of application: **24.09.2003**
(21) Application number: 03250836.8
(22) Date of filing: 11.02.2003
(51) Int. Cl.: H04M 3/493, H04M 1/57, H04M 1/27

(54) **System and method for a home network telephone universal phone book**

(30) Priority: 20.03.2002 US 102245
(71) Applicant: Sharp Kabushiki Kaisha, Osaka-shi, Osaka 545-8522 (JP)
(72) Inventor: Mansfield, Carl, Camas, Washington 98607 (US)
(74) Representative: Brown, Kenneth Richard

(57) **Abstract**

A system and method are provided for maintaining a universal phone book in a Home Network telephone system. The universal phone book system comprises a gateway to transceive calls via external communication medium and to act as a bridge between the external communication medium and a plurality of endpoint communications devices, which are typically telephones but can also be fax machines, video-phones, modems, or the like. The gateway also maintains a universal phone book that is accessible to all of the plurality of endpoints. The gateway establishes an out-of-band control channel between the gateway and each endpoint accessing the universal phone book.

## Description

### FIELD OF THE INVENTION

The invention generally relates to Home Network telephone systems and, more particularly, to a system and method for maintaining a universal phone book for a Home Network telephone system.

### BACKGROUND OF THE INVENTION

Several residential and SOHO telephones support a phone book function. This phone book function allows the user to enter a small number of frequently-used telephone numbers, and associate a meaningful text string, called a descriptor, with the number. One example of a descriptor is the caller's name. The phone book serves two main purposes: (1) it can be accessed via a suitable user interface, allowing easy selection of stored numbers for dialing without the need to manually dial or remember the number; (2) When Calling Line ID (CLID) signaling is supported, the phone book can be used to match a dialer's number to his name, allowing the phone to display the more meaningful name of the caller, rather than just their number.

There are conventional multi-handset cordless telephony products that can store phone books and call lists in both the base unit and the handsets. The phone books in each handset and the base unit are distinct and locally stored, although some systems support the capability to copy entries from one part of the system to another.

The main problems of these conventional systems are as follows:
- Typical phones have a somewhat limited memory space for phone book entries, typically about 30 numbers;
- If the user has many phones in the home, they must separately program the phone book of each telephone, possibly with duplicate descriptors and numbers;
- If the user has many phones in the home, some numbers may not have been programmed into every phone, which leads to frustration since an entry expected to be available often cannot be found;
- Entering ASCII text into a telephone using a numeric keypad is inconvenient; and,
- It is typically impossible to print the phone book (hard copy), unless the telephone has an integrated Fax device.

It would be advantageous if a phone book could be conveniently maintained for an entire system of Home Network endpoint communication devices.

It would be advantageous if a phone book could be maintained that was universally accessible by Home Network endpoint communication devices.

It would be advantageous if the above-mentioned universal phone book could be centralized in the gateway of the Home Network telephone system.

### SUMMARY OF THE INVENTION

This disclosure is related to a Home Network telephony system, in which a broadband gateway is used to access broadband service such as DSL, cable modem, fixed wireless access (FWA), or fibre to the home (FTTH) that provides digital derived voice services, in addition to broadband data services. These voice services are then distributed inside the customer premises using a digital Home Network technology. A Voice over Home Network (VoHN) protocol is used to support the telephony service over the Home Network system. More specifically, the present invention is a single, universal phone book for the home, which can be accessed by any of the telephony devices on the network.

A novel VoHN protocol is presented to support the necessary out-of-band signaling needed to implement the universal phone book. The functionality enhancements provided over conventional systems include expanded phone book memory and easy editing of phone book entries. For example, using a personal computer (PC) keyboard rather than the numeric keypad of a telephone. Other improvement include: new phone book entries only need be added once for the home, not once per endpoint communication device; phone book entries can be printed to hard-copy via a printer attached to the Home Network, even if the telephony device is not a fax machine; all phone book entries can be accessed from every endpoint communications device; in the advent of a power failure, small local phone books are available in the endpoints; and, a universal phone book (UPB) can be synchronized with contact information from other personal information management software located on a device within, or able to communicate with the Home Network.

This system differs from conventional multiple handset cordless telephones in that the present invention universal phone book is stored in a residential gateway, not in the base unit of the cordless phone. Further, the present invention system is designed to operate with any potential Home Network technology, not just cordless telephone interfaces. While conventional cordless telephones are limited to a maximum of about 100 numbers, and more typically only 30 numbers, the present invention system can readily store thousands of numbers.

Accordingly, a system is provided for maintaining a universal phone book in a Home Network telephone system. The universal phone book system comprises a gateway to transceive calls via external communication medium and to act as a bridge between the external communication medium and a plurality of endpoint communications devices, which are typically telephones but can also be fax machines, video-phones, modems, or the like. The gateway also maintains a universal phone book that is accessible to all of the plurality of endpoints. The gateway establishes an out-of-band control channel between the gateway and each endpoint accessing the universal phone book.

The gateway transceives calls on external communication medium that communicate call information in a format such as voice over cable modem (VoCM), voice over DSL (VoDSL), voice over ATM (VoATM), voice over Internet Protocol (VoIP), collectively referred to herein as voice over broadband (VoBB). In addition, the gateway can transceive calls on legacy external telecom systems such as integrated service digital network (ISDN) or plain old telephone service (POTS). The endpoints are connected with the gateway with connection interfaces such as wireless, conventional telephone line, AC power line, or dedicated hard line connections.

In some aspects of the invention an input/output (I/O) device, such as a PC, is connected to the gateway and used to edit (add, modify, and delete) phone book entries. Alternatively, an endpoint can be used to view the phone book. A printer connected to the browser I/O device can be used to create a hard copy of the phone book.

As mentioned above, the universal phone book stores entries as a number/descriptor pair. The descriptor is an ASCII string with a "who" associated with a number in a way that is meaningful to the user. For example, a descriptor can be a full name, a nickname, an abbreviated name, or a business associated with the number. The descriptors can be retrieved from the UPB and presented to the user by the use of user-defined option categories. Examples of optional categories include friends, colleagues, business, and personal. Once the user selects a category, only the entries from that category are presented.

In some aspects of the invention, each endpoint includes a local phone book of telephone numbers that is accessed in response to losing access to the universal phone book. If the endpoint's local phone book is large enough, the entries can be organized in a variety of option categories.

Additional details of the above-described universal phone book system, and a method for maintaining a universal phone book in a Home Network telephone system, are described below.

For a fuller understanding of the nature and advantages of the invention, reference should be made to the ensuing detailed description taken in conjunction with the accompanying drawings.

### BRIEF DESCRIPTION OF THE DRAWINGS

Fig. 1 is a schematic block diagram of the present invention system for maintaining a universal phone book in a Home Network telephone system.
Fig. 2 is a schematic block diagram of the first endpoint, which is representative of the other endpoints.
Fig. 3 illustrates the out-of-band signaling used to manage the universal phone book.
Fig. 4 is a detailed depiction of the UPB configuration of Fig. 1.
Fig. 5 is a more detailed depiction of the LBP entity for the first endpoint, which is representative of the other LBP entities.
Fig. 6 is a diagram illustrating the control channel communications between the gateway and an endpoint accessing the universal phone book.
Figs. 7 and 8 illustrate the use of control channel communications between the gateway and an endpoint to enable a UPB search.
Fig. 9 illustrates the use of control channel communications between the gateway and an endpoint to support calling line ID functions.
Figs. 10, 11, and 12 are flowcharts illustrating the present invention method for maintaining a universal phone book in a Home Network telephone system.

### DESCRIPTION OF THE EMBODIMENTS

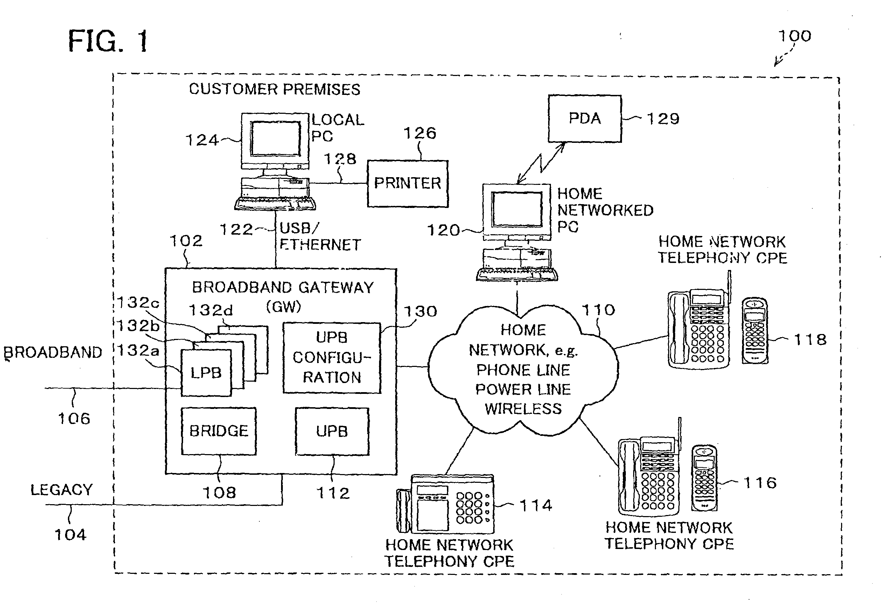

Fig. 1 is a schematic block diagram of the present invention system for maintaining a universal phone book in a Home Network telephone system. The universal phone book system 100 comprises a gateway (GW), or broadband gateway 102 having an input to transceive calls on external communication medium. The gateway 102 transceives calls on external communication medium that communicate call information in a first format that generally includes voice over broadband (VoBB) and legacy services. VoBB is defined herein to be voice over cable modem (VoCM), voice over DSL (VoDSL), voice over Internet protocol (VoIP), fixed wireless access (FWA), or fibre to the home (FTTH), and voice over ATM (VoATM). The legacy services are the integrated service digital network (ISDN) and plain old telephone service (POTS). The external line 104 is for POTS and ISDN service and line 106 is for VoBB. The present invention is not limited to any particular number of lines or specific telephone services. The gateway 102 supplies a communications bridge 108 between the external lines 104 and 106, and a Home Network port on line 110. Line 110 represents transmission medium such as wireless, convention telephone line, AC power line, and dedicated hard line connections. For brevity, the home network transmission medium will be referred to hereafter as line 110.

In some aspects, the system 100 permits a fallback to basic line-powered, legacy analog POTS operation. This support for "lifeline" telephony provides access to telephone service in the case of power failure, or broadband service failure. Note that if the gateway 102 integrates DSL as the broadband access, the POTS service can enter the gateway 102 via the same physical connector as the VoBB service, in which case lines 104 and 106 are the same. Otherwise, an additional jack for incoming POTS is required (as shown). Likewise, an additional jack for ISDN services may be supported. Thus, the gateway 102 can implement an analog POTS client and voice over broadband clients. This allows the gateway 102 to answer an analog call or broadband network call, and bridge this to voice over Home Network (VoHN) service inside the home.

The gateway 102 acts as a router/firewall between the broadband access connection to the ISP and Internet and in-home data devices on the Home Network. The Home Network technology is also capable of transmitting high-quality voice traffic. The system 100 uses protocol enhancement on top of the basic Home Network technology, which is referred to herein as VoHN protocol. For example, the home phone line network alliance (HomePNA) system uses Voice over HomePNA (VoHPNA) to support voice traffic.

The gateway 102 is able to bridge telephony between the VoBB service on the access system and the VoHN transport in the Home Network. This allows the endpoint communication devices, typically referred to as endpoints, to access the VoBB services to make and receive VoBB telephone calls, even though they do not implement a VoBB client directly.

The gateway 102 also maintains an accessible universal phone book (UPB). In some aspects of the system 100 the universal phone book 112 is stored in nonvolatile memory. The universal phone book 112 is typically comprised of a table that stores entries. Entries are pairs of a "Phone Number" and a "descriptor". A descriptor is a name, nickname, or the like, that provides the user with a meaningful business or person associated with the telephone number. They are stored in a way that simplifies indexing and alphabetical retrieval. See Table 1.

**TABLE 1**

| Number | Descriptor | Option Categories | | |
|---|---|---|---|---|
| | | User | Endpoint | General |
| 555.324- 0934 | Joe Smith | Mom | | Friends |
| 555-745- 9934 | Dad | | Office Phone | Family |
| 555-834- 9934 | AM Pluming | | Office Phone | Service |
| 555.934- 2313 | Dr. Jones (Fax) | Dad | | Work; Fax |
| 555-934- 2388 | Dr. Jones | Dad | | Work |
| 555-634- 9343 | Jenny Smith | Tina | Tina's room | |

The system 100 further comprises a plurality of endpoints. where each endpoint has a port connected to the gateway 102 for accessing the universal phone book 112. Shown are a first device 114, a second device 116, a third device 118, and a fourth device 120. The system 100 is not limited to any particular number of endpoints. Typically the endpoints are telephones, but they can also be fax machines, multifunction peripherals (MFPs), video-telephones, or computers. Generally, wireless or hardwired devices, regardless of their function, can be connected in the system 100. Note that the universal phone book 112 is accessible to all of the plurality of endpoints 114-120 via line 110.

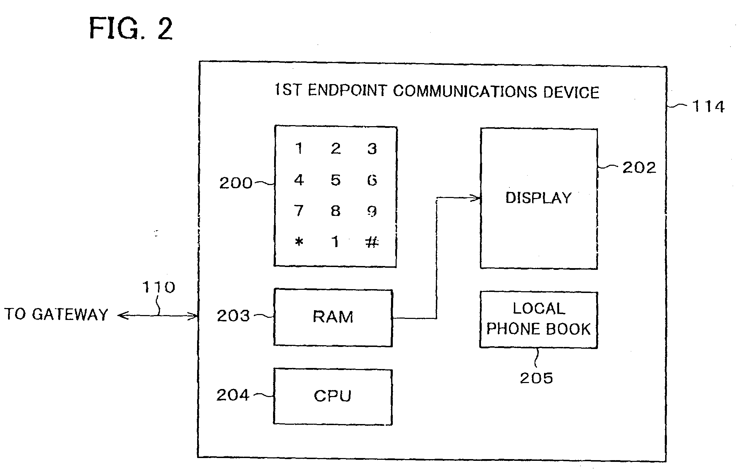

Fig. 2 is a schematic block diagram of the first endpoint 114, which is representative of the other endpoints. Conventionally, each endpoint includes a local input interface 200 that can be used with the present invention system 100 for accessing universal phone book entries. The local input interface 200 can be a keypad (as shown), voice recognition system, touch pad, or any equivalent. It is also conventional for an endpoint to have a display 202 that can be used with the system 100 for depicting at least a portion of the universal phone book, in response to accessing the universal phone book 112.

The first endpoint communications device 114 also comprises a volatile memory 203 available for temporary storage of a subset of UPB entries, such as RAM (as shown) with a memory capacity. When the endpoint 114 transmits an out-of-band message to the gateway requesting universal phone book (UPB) entries, information is also sent related to the endpoint's memory capacity, and the gateway returns a list of entries constrained it fit in the endpoint's memory capacity. That is, the returned list is tailored to "fit" in the volatile memory 203. In another aspect of the system 100, the endpoint may communicate memory capacity information, prior to a request to access the UPB, using a separate out-of-band message.

In response to accessing the UPB, the endpoint 114 receives entries provided by the GW, stores these entries in the volatile memory 203, and presents the entries to the user on the endpoints display 202. In one aspect, the volatile memory 203 is capable of holding more entries than can be displayed simultaneously on the display 202. In this case, the user can control which of the entries stored in the volatile memory 203, are displayed using the input interface 200, and software running on an endpoint CPU 204 controls the display 202 accordingly. In another aspect, the endpoint 114 is designed such that the volatile memory 203, is sized to be able to handle the same number of UPB entries as the display 202, and can simultaneously present the entries to the user. In this aspect the UPB driver display software. running on the endpoint CPU 204, is simpler.

Returning to Fig. 1, the gateway 102 transceives calls on external communication medium 104/106 that communicate call information in a first format, as described above. The gateway 102 converts between the first format and a digital Home Network format and establishes traffic channels to communicate information to the endpoints in the Home Network format. As explained in more detail below, the gateway 102 establishes an out-of-band control channel for accessing the universal phone book 112 from the endpoints. Note, the control channel may be used for other functions besides access to the universal phone book 112.

In some aspects of the system 100, the gateway 102 has an input/output (I/O) interface on line 122. Then, the system 100 further comprises an input/output (I/O) device 124 having an output connected to the gateway I/O interface on line 122 for editing universal phone book entries. As shown, the I/O device is a personal computer (PC) loaded with software to enable the editing of the universal phone book, and the line 122 can be an Ethernet (registered trademark) or USB interface for example. Alternatively, the I/O device 124 can use a web browser and the gateway 102 can act as a web server in communications with the I/O device 124. The PC endpoint 120, for example, might also access the gateway web server via Home Network transmission media 110 for editing functions.

In some aspects of the system 100, the gateway 102 establishes a security protocol for enabling access to the universal phone book 112, and the I/O device 124 communicates using the security protocol, prior to editing the universal phone book 112. The term editing as used herein includes the functions of adding, deleting, and modifying existing entries and UPB configuration preferences. For example, the user of the I/O device 124 is prompted to enter a password. Then, the gateway 102 permits the universal phone book 112 to be edited after the proper password is entered. Other well-known security protocols can be used. Also, classes of access can also be defined. For example, a password may be required to modify or delete entries, but not required to add entries.

Some aspects of the system 100 further comprise a printer 126 having an input connected to the I/O device 124 on line 128. The I/O device 124 enables the printer 126 to print a hardcopy of the universal phone book 112 in response to communications with the gateway 102. Alternatively, a printer (not shown) attached to the PC endpoint 120, or a fax device endpoint can also be used to print out hard copies of the UPB or UPB entries via Home Network transmission media 110 communications.

Thus, any PC attached to the system 100 can be used to browse to the internal web server inside the gateway 102. This internal web server has, possibly on a separate HTML page, the complete universal phone book (UPB) list. From this page, using their PC and the web browser interface, the user can do the following:
1. Print the phone list;
2. Edit existing entries;
3. Add new entries;
4. Delete entries; and,
5. Copy entries between the browser and another PC application.

The universal phone book may also be edited by using the endpoint devices themselves. Then, the endpoints 114-120 use the control channel established by the gateway 102 for editing universal phone book entries. As above, the gateway 102 can establish a control channel security protocol for editing the universal phone book 112 from an endpoint, and an endpoint must use the control channel security protocol (i.e., a password) prior to editing universal phone book entries. Different classes of access may be required for different endpoints in the system. Further, different classes of access may be required for endpoints than for the I/O device 124.

The user can also use any endpoint in the system to perform some basic UPB management functions. They can scroll the UPB 112 and delete or edit entries that they find using the endpoint's function key and numeric keypad to enter alphabetic characters. They can also add a new phone number/name to the UPB 112 by entering the number and name from scratch.

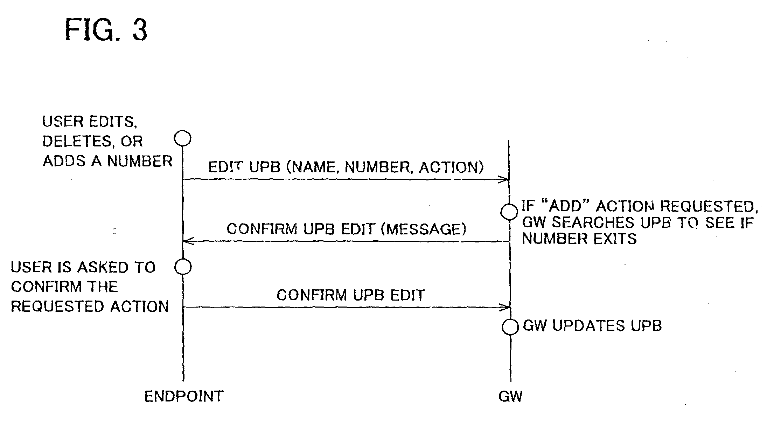

Fig. 3 illustrates the out-of-band signaling used to manage the universal phone book. Although endpoint out-of-band signaling is depicted, the I/O device communications are similar. Communication occurs as follows:
1. The user edits, deletes or adds a number. This results in an out-of-band message being sent to the GW that provides the entry (descriptor and number), plus the action the user requests (delete, edit, add).
2. If "add" was requested, the GW looks to see if there is already an entry with that number. If there is, the new "name" would over-write the old "name".
3. The GW sends and out of band message asking for confirmation. This message may include a message that the GW generates such as "confirm addition of xxx"; "number yyy already exists as xxx, do you want to overwrite?"; "press to confirm deletion of xxx" (where yyy is the number being modified, xxx is the descriptor).
4. If the user decides to confirm, a confirmation is sent to the GW and the UPB is updated. Otherwise, no confirmation is returned and the update does not occur (alternatively a negative confirmation could be sent, indicating the GW should abandon the requested change).

The data stored inside the GW can be easily synchronized with another Personal Information Management applications on any desktop PC attached to the Home Network, such as the fourth endpoint 120 or I/O device 124, see Fig. 1. Example applications include Microsoft (registered trademark) Outlook (registered trademark) and Palm desktop. Likewise, it is also possible for the data inside the GW to be directly synchronized with data stored inside a PDA or personal organizer. A PDA/organizer 129 (see Fig. 1) can connect to the GW 102 via a Home Network PC 120, or even directly if the PDA/organizer 129 has a port 110 on the Home Network that provides connectivity to the gateway 102. One additional benefit of this feature is that a catastrophic failure of the GW 102 does not result in the loss of all the stored UPB, since it has copies stored on the PC 120 and/or PDA 129 and/or another endpoint, from where the data is easily recovered.

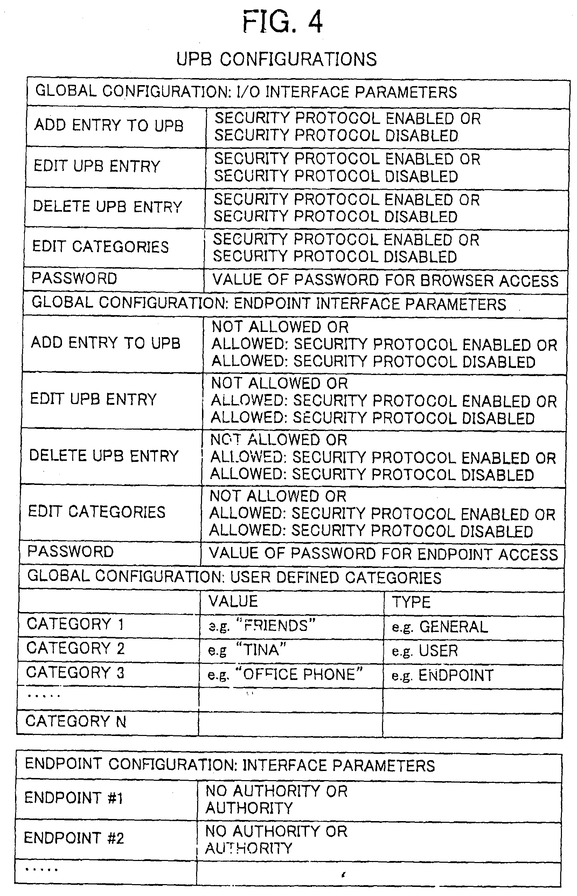

Fig. 4 is a detailed depiction of the UPB configuration 130 of Fig. 1. The UPB configuration 130 is typically stored in non-volatile GW memory. The UPB preferences table includes global parameters that define how the UPB behaves for the whole network. For example, if endpoint interface parameters are all set to "NOT ALLOWED" except for "add entry to UPB" which is set to "ALLOWED: SECURITY PROTOCOL DISABLED", this means that none of the endpoints can perform editing or deleting of entries or categories. However, every endpoint can add a UPB entry unless the "Endpoint configuration: interface parameters" for that endpoint are set to "NO AUTHORITY". If this case, nothing can be done from that endpoint (add, edit, delete) regardless of the global settings for endpoint editing in the network.

Categories have an associated TYPE, due to the need to distinguish between the three types of categories mentioned above. In simpler implementations, this full "UPB preferences" is not needed because it collapses to a simpler subset.

Returning to Fig. 1, in response to communications with the I/O device 124, and/or an endpoint communications device 114-120, the gateway 102 permits access to the UPB entries. The entries are telephone numbers paired to descriptors. Further, the entries are cross-referenced to option categories such as user-defined groups, groups defined by the endpoint accessing the universal phone book, most recent calls, most frequent calls, general groups, pre-defined groups, or categories defined by the external communication media selected.

The endpoint specifies a search parameter, typically a "name descriptor. For example, if the user was looking for "Dave Jones", the user could type "Jones" and select search UPB form the user interface of the endpoint to search for all entries where "Jones" is part of the descriptor. Entries with the descriptor "Jones" would be retrieved from the UPB. In the most general case, the UPB returns all name-descriptor pairs that match, regardless of any consideration of option categories. However, the endpoint can also specify search for a number-descriptor pair that matches this name, but only from among number-descriptor pairs that are associated with a "FAMILY" option category. In this case, fewer matches for "JONES" would likely be returned, as the UPB would provide only entries from the selected option category. Another technique is to search for a "empty" descriptor (or wild card) in option category of "FAMILY". In this case, all number-descriptor pairs (entries) in option category "FAMILY" are returned. In this scenario, the user can scroll through the presented entries.

It is possible to associate an entry with one or more endpoints. That is, endpoints can be used as an option category. It is possible, for example, to assign some entries to a specific endpoint. One example of this use is a home where a teenage daughter has her own Home Network telephone. Here, she can enter her friends into the UPB and associate them only with the phone located in her bedroom. In this case, the UPB entries of her friends are only visible to the phone in her bedroom and her younger brother cannot see them on his phone in his room. Alternatively, a default condition can be established to make all entries accessible to all the endpoints. If an entry has no endpoint associated with it, it can either be made accessible to all of the endpoints, or none of the endpoints.

Users are another type of option category. In this case, a particular individual identifies themselves when opening the UPB at a phone in the Home Network. That is, the user would select an "individual" option category. For example, when the Mother of the home opens the UPB, the endpoint would prompt her to select a user from a list of the family members. After selecting "Mom' from the list, she will only see UPB entries in the "Mom" option category. Alternatively, the user can select a different or more a general option category when a more complete list of UPB entries is required.

When opening the UPB, the user can be prompted to select from a list of option categories. Users can define and sort option entries in option categories such as "work", "home", "Family", or "VIPs". For option categories associated with a user or a user preference, another extension that can be implemented is a form of simple password, so that the user is required to confirm their identity before gaining access a certain option category of UPB entries. The password could be a simple numeric password, for example.

Returning to Fig. 2, in some aspects of the system each endpoint, of which the first endpoint 114 is representative, includes a local phone book (LPB) 205 of entries. Again, an entry is defined as a telephone number paired to a descriptor. The local phone book 205 typically has a much smaller number of entries than the universal phone book. The first endpoint 114 might access its corresponding local phone book 205 in response to losing access to the universal phone book 112. This situation may occur, for example, if the gateway loses power, but service is still available over the POTS line 104. In another aspect of the system 100, the user may be permitted to manually search through either the LPB 205 or the UPB, when, both are available.

In some aspects of the invention, the endpoint includes a large enough number of entries to justify organization by option category. Again, the option categories can be names, user-defined groups, most recently called numbers, and most frequently called numbers, as the UPB is organized. In some aspects, the first endpoint 114 stores its corresponding local phone book 205 in nonvolatile memory.

Certain system endpoints may be expected to support lifeline telephone service. Lifeline service is Analog POTS, with the telephone line powered by current passed down the copper pairs from the telephone exchange. If a telephone (endpoint) supports this capability, the telephone can still be used to dial using the lifeline service when the broadband access or broadband GW fail, or if there is a power outage.

Whenever the power fails, or the GW fails, the UPB is no longer available to the telephone, even though it can potentially make and receive calls using the lifeline POTS service. When in this mode, the endpoint can only access numbers from its local phone book, which stores a smaller number of telephone number/descriptor pairs (perhaps about 30). Similarly, any incoming call will only recognize and display the descriptor related to an incoming calling telephone number if the number is stored in the local phone book of the called endpoint. Of course, a user can still dial a number directly using the numeric keypad of the endpoint, without resort to a number stored in electronic memory.

There are a number of possible ways to support management of the LPB's in each of the endpoints. In the simplest case, the LPB is managed at each endpoint independently of the UPB, using the endpoint's input device and keyboard. This mode is referred to as "independent LPB".

In a second case, the LPB can be configured to automatically store the subset of number-descriptor pairs from the UPB that are the most recently used, or most frequently used. This approach requires no interaction on the part of the user to maintain the LPB. This mode is referred to as "automatic LPB".

In the third case, the gateway integrates the UPB and LPB functions. This final mode is referred to as "user-defined LPB". Returning to Fig. 1, the gateway 102 contains a multiplicity of LPB entities 132, which are stored in non-volatile memory in the gateway. There is one such LPB entity for every endpoint in the network that supports this third approach for LPB management. Shown are LPB entities 132a through 132d, corresponding to endpoints 114-120, respectively. For endpoints that are set to "user-defined LPB" mode, each corresponding one of these LPB entities 132a-132d stores a copy of the number-descriptor pairs that are stored in the LPB at the corresponding endpoint. Using the I/O interface to the GW on line 122, the user can view and edit the LPB entries for each endpoint. The management of the LPB's is thus much more simple since the user can simply select, or copy and paste, or drag and drop numbers from the UPB to assign them to any one of the LPB's.

A user can select between the independent LPB, automatic LPB, and user-defined LPB. This selection can be made from the endpoint itself or from the I/O device 124. Again, security protocol can be implemented to control the selection process based upon the endpoint making the selections, or identification of the user. In one aspect of the system, the selection is based upon the capabilities of the endpoint, not explicitly selectable by a user. For example, if an endpoint cannot support the user-defined LPB option, the independent LPB may be selected by default.

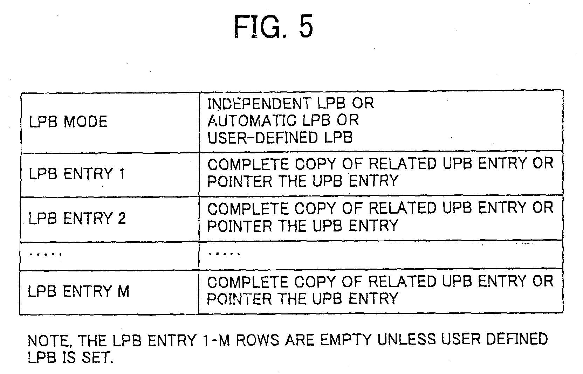

Fig. 5 is a more detailed depiction of the LBP entity 132 for the first endpoint, which is representative of the other LBP entities. Specifically, the LPB entity stores a flag indicating the mode in which the LPB is set. Further, if the LPB is set to USER DEFINED LPB mode, the LPB entity also stores the necessary information to identify which of the UPB entities are stored in this particular LPB. This can be done either in the form of a complete copy of the UPB entry in the LPB, or a pointer to the related UPB entry.

Returning to Fig. 1, the first endpoint 114 uses the control channel to edit the local phone book 132a maintained by the gateway 102. Alternatively, the local phone book 132a is edited in communications between the gateway 102 and I/O device 124. As before, a control channel security protocol can be established for editing the local phone book 132a from the endpoint. Likewise, the gateway 102 can establish a security protocol for editing the local phone book from the I/O device 124.

Whenever the LPB for any endpoint is edited, regardless of whether the editing originates from an endpoint or I/O device, the endpoint and gateway exchange out-of-band VoHN signaling messages to ensure that two copies of the LPB remain fully synchronized.

In the user-defined LPB mode, the local phone book 205 (see Fig. 2) in the endpoint, and the local phone book 132 in the gateway, store entries that are a fixed subset of the UPB 112. The user can select which entries from the UPB 112 are used in each LPB by either: (1) selecting them from the endpoint's local interface, for example by scrolling the UPB and selecting an option "add to local PB" when the desired number is found; or (2) using the I/O device 124. Whenever the LPB entries are changed by either method, a VoHN control channel is used to exchange cut-of-band signaling messages between the GW and endpoint to synchronize (make common) the LPB's Stored in both locations.

In the latter case, the user will browse the GW's internal web server from a PC 124 or 120. The web page embedded in the GW includes the local phone list of the desired phone. The LPB list that is shown is stored locally in the GW, but is a synchronized copy of the LPB stored at the desired endpoint.

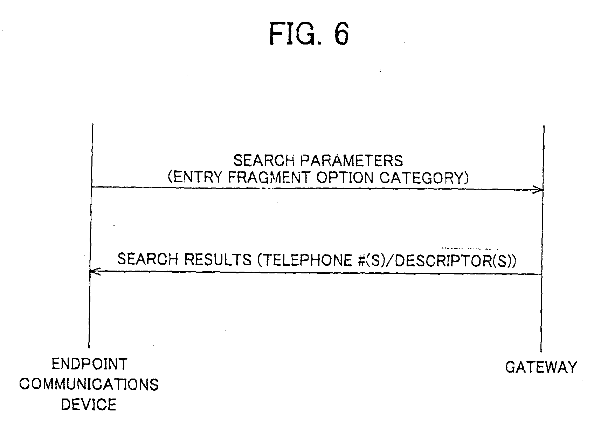

Fig. 6 is a diagram illustrating the control channel communications between the gateway and an endpoint accessing the universal phone book. The gateway accepts out-of-band messages from an endpoint specifying universal phone book search parameters, and transmits out-of-band messages to the endpoint returning the results of the universal phone book search. For example, the first endpoint makes an entry that may be a descriptor, a descriptor fragment, a telephone number, or a telephone number fragment. Additionally, the search parameters may include an option category to filter the returned entries. Then, the gateway communicates an out-of-band message to the first endpoint returning one or more descriptors paired to a telephone number. If no matching entries are found in the UPB, the gateway communicates an out-of-band message to the first endpoint indicating that no matching records have been found.

To continue the example, the gateway receives an option category from the first endpoint, such as "work". The first endpoint also transmits a descriptor, entered using the local interface, such as "Bob". Then, the gateway 102 searches the universal phone book option category of "work" for the "Bob" descriptor, and returns at least one descriptor cross-referenced to a telephone number. If the user sends Search UPB ("Bob", work) the UPB will only return entries where "Bob" was in the descriptor and the option category included "work". Note that there may be no matching entries in the universal phone book, or several entries under the name "Bob".

If the user sends Search UPB ("Bob", "" ), no option category is specified and all entries with "Bob" in the descriptor are returned, regardless of option category to which they are cross-referenced. If the user sends search UPB ("", work), i.e. empty search string, or Wild card, all entries that are in option category "work" are returned.

A telephone number can also be used as search criteria. For example, if a user enters Search UPB ("360834", ""), all UPB entries where the number contains "360834" are returned. As described above, the number of entries, and the presentation of the returned entries may be constrained by the memory capacity of the endpoint.

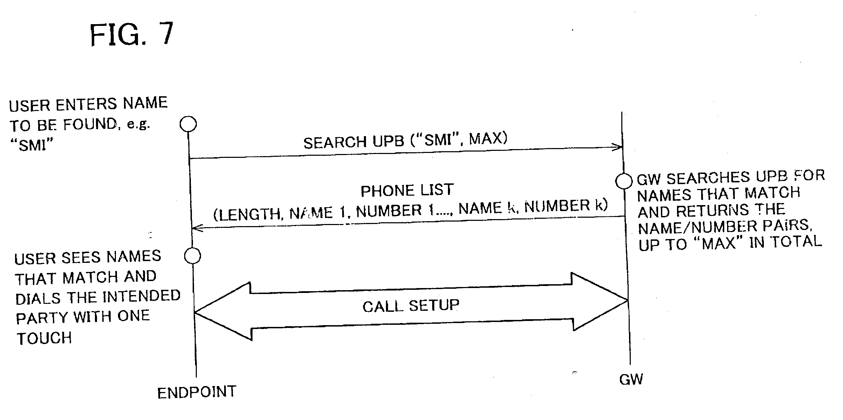

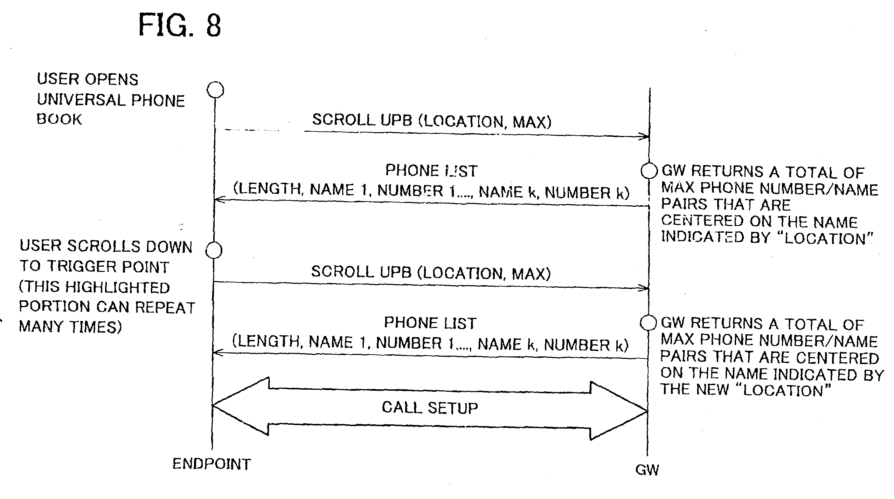

Figs. 7 and 8 illustrate the use of control channel communications between the gateway and an endpoint to enable a UPB search. Typically, a user will select a telephone number from the universal phone book from the endpoint communications device itself, in order to dial an outgoing call. There are two ways of doing this; search by name (Fig. 7) and a scrolling search (Fig. 8).

In the search by name approach (Fig. 7), the user enters the name of the person (descriptor) they are seeking, using the alphabetic entry capabilities of the numeric keypad on the endpoint. The user can enter the whole name, only the first few characters, or a subset of the name related to the sought telephone number.

For example, a user can search for Dave Smith but only entering "Smi". When either the user presses a key to send the search string, or the endpoint communications device determines that enough characters have been entered (the device can be set to automatically send the string after 3 or 4 characters are entered, to speed the process), the device sends an out-of-band message to the gateway requesting a search of the universal phone book. In this request message, the search string and the maximum number of phone book entries ("Max") to retrieve are returned. The parameter "Max" is needed to avoid the endpoint communications device memory capacity limitations, as described above.

The gateway (GW) searches the database to find all the descriptors that match. The gateway searches in an intelligent way that allows Dave Smith's number to be located even if it were stored as "Smith, Dave", or "Dave Smith", or any other logical combination. The GW returns the found descriptor and number pairs in another out-of-band message to the endpoint. This message shows the number of matches and lists then all as descriptor and number pairs.

If the GW finds more matching entries than the endpoint can accept, it will not be able to return all of the matching entries. In such a case, the GW can select which of the entries to return in some arbitrary manner, and may also indicate to the endpoint that more entries exist than could be returned. This information may be indicated to the user on the display of the endpoint so that they are not surprised if an expected entry is not found. In such a case, the user would need to re-enter their search with more specific search string, or resort to scrolling the UPB.

The retrieved descriptor/number pairs are displayed to the user on the endpoint. The user can easily scroll through the retrieved list and select the desired entry, dialing the call to the proper number with a single key-press, when the correct entry is found, as shown at the bottom of Fig. 7.

Alternatively, the first endpoint communications device transmits one entry character per out-of-band message and the gateway refines the full descriptor search results in response to the number of characters in the search parameter. For example, in response to entering the character "S", the gateway returns descriptors (and corresponding telephone numbers) beginning with "S", in response to entering the second character "m", the gateway returns names beginning with "Sm", in response to entering the third character "i", the gateway returns names beginning with "Smi".

As an alternative mechanism to searching the UPB by entering search string and option criteria, the user may open the UPB for remote scrolling. To do this, the user simply opens the UPB from an endpoint for scrolling, and manually scrolls through the entire list in alphabetic name order, until the user reaches the desired number, which they can dial with one-touch. As the user scrolls, the gateway transfers portions of the UPB to the endpoint in one or more out-of-band signaling messages for display on the user interface of the endpoint device.

In some aspects of the system, the user may select an option category prior to opening the UPB for scrolling. In this scenario, only entries which belong to the selected option category are provided to the endpoint a displayed as part of the scrolling UPB list. In other aspects of the system, it is possible for the user to select or change the option category during the scrolling process.

The scrolling mechanism operates as follows:
1. The User opens the Universal phone book. Typically, when opened the starting point of the phone book could be at the beginning of the alphabet. Alternatively, the user could press one key (e.g. 4 for GHI), indicating that they want to start the scrolling operation at the beginning of letter "G".
2. An out of band message is sent to the GW requesting a list of entries to be returned to allow scrolling. This message indicates the location where the numbers should be centered around, and the total number of phone number/name pairs to be returned. For example, if location is "G" and Max is 20, 20 numbers located around the first alphabetically ordered entry beginning "G" are requested.
3. Based on the requested location, the GW returns Max entries to the Phone, centered at the requested location. For example, if the requested location is "A", and max =21, the GW will return the last 10 name/number pairs at the end of the alphabetic sorted order and the first eleven name/number pairs at the beginning of the alphabetically sorted list.
4. The user can scroll up and down through the subset of the universal phone book that they have been given. Typically, the endpoint displays more than one entry at a time. For example, a 3-line LCD might show the previous, current and next entries.
5. If the user scrolls too near to the end of the set of numbers that is stored in RAM, it is necessary to download another set of numbers from the GW, so that the scrolling can continue. This can be triggered in one of three ways:
   i) When the user is within N entries of the edge of the current list, a new list is requested centered at the current point. N is independent of Max.
   ii) When the user is within a certain fraction of Max of the edge of the current list, a new list is requested centered at the current point. For example, this might trigger if the user gets within Max/5 of the current edge of the list.
   iii) When the user reaches the edge of the current list and tries to scroll to the next item that has not yet been sent by the GW, a new list is requested.

   One of the first two approaches is desirable, since the delay perceptible to the user will be smaller. Also, the third approach does not allow the LCD to display previous, current and next entries on the phone LCD when the edge of the list is approached.
6. When the trigger point is reached, the endpoint sends a new request for phone book descriptors to the GW, using the Scroll UPB message, which returns them in the same manner as before. The new request specifies a list that is centered around the new current location. The new list can effectively replace the old list stored in volatile memory in the endpoint. Therefore, only a small amount of memory space is required at the endpoint in order to scroll through the entire UPB. In some aspects, the user can submit an option category with the scroll UPB message, to filter the number of returned entries.
7. Steps 4-7 can repeat, potentially indefinitely, until the user locates the name/number they are seeking. Once that name/number is found, the user can dial it with a single key press.

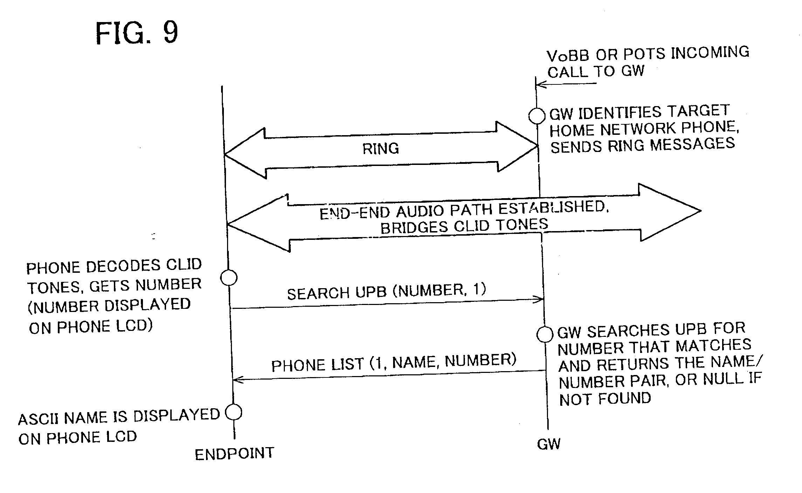

Fig. 9 illustrates the use of control channel communications between the gateway and an endpoint to support calling line ID functions. When there is an incoming call, an endpoint that supports Calling line ID (CLID) will typically be able to display the callers name, assuming the calling number is stored in the endpoint's phone book, and therefore recognized by the endpoint. It is desirable to support this feature with the universal phone book, so that CLID can display the name of any one of the potentially hundreds of name/number pairs stored. Thus, a call with a destination of the first endpoint, for example, can cause the display (202, see Fig. 2) to depict a descriptor referenced to the caller's number in the phone book.

Two methods are possible for retrieving the descriptor related to the caller's number from the UPB, in order to display it on the endpoint display. In the first method, the gateway receives calling line ID (CLID) information for incoming calls on the external communication medium, uses the universal phone book to cross-reference an identified telephone number to a descriptor, and communicates the cross-referenced descriptor to the endpoint communication device in an out-of-band VoHN message. In the second method, the gateway is not capable of decoding incoming CLID tones. The second method performs as follows:
1. An incoming call (VoBB/POTS) reaches the GW. The GW maps the call to an endpoint and sends the out-of-band "ring" message, causing the endpoint to "ring".
2. The GW establishes an end-to-end audio path between caller and the endpoint. This audio path carries the in-band CLID tones that signal the caller's ID.
3. The endpoint decodes the CLID tones and gains the calling number. At this point, the endpoint can display the calling number. Optionally, the endpoint may also do a fast lookup inside its own local phone book. If the number exists there, the endpoint displays the descriptor that is paired with the number If the number is stored in the local phone book, the process could end here, or still proceed to step 4, either approach is possible.
4. The endpoint sends a Search universal phone book (UPB) out-of-band message to the GW, basing a search upon the phone number decoded by CLID.
5. If the GW finds the number, it returns the single number, name pair to the endpoint.
6. The endpoint can display the descriptor retrieved from the UPB.

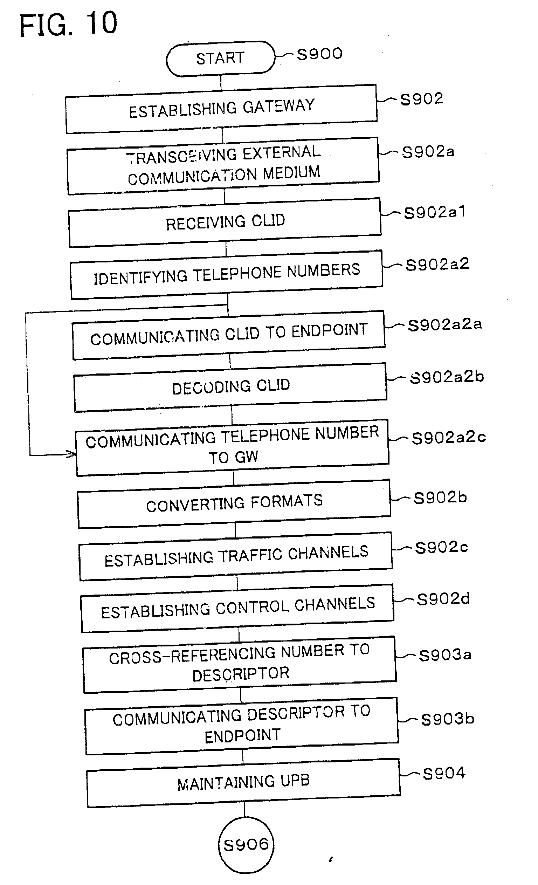

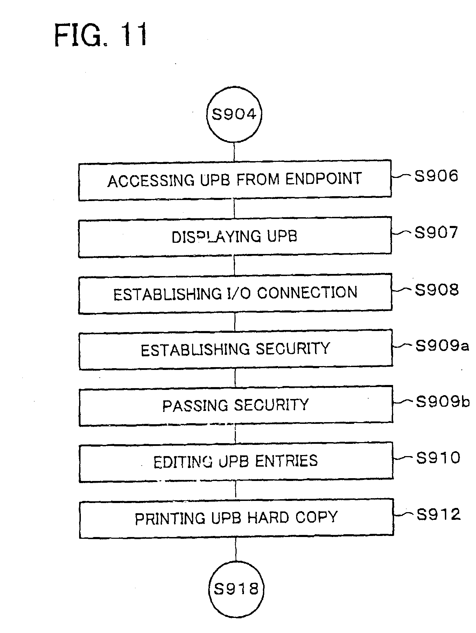

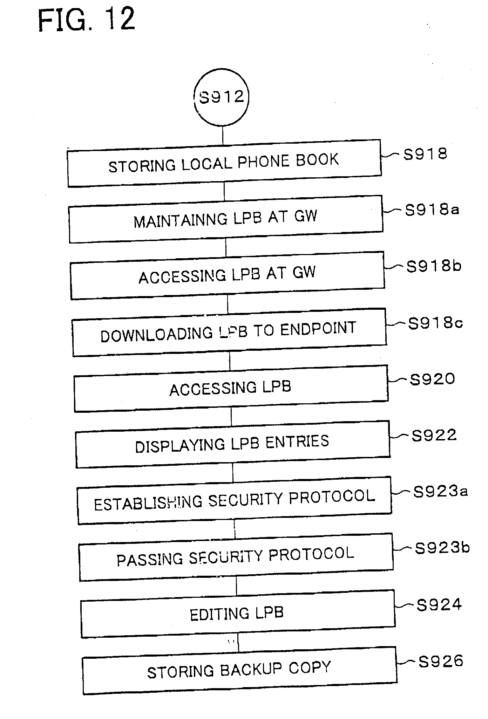

Figs. 10, 11, and 12 are flowcharts illustrating the present invention method for maintaining a universal phone book in a Home Network telephone system. Although the method has been depicted as a sequence of steps for clarity, no ordered should be inferred from the numbering unless explicitly stated. The method begins at Step 900. Step 902 establishes a gateway to serve a plurality of Home Network endpoints. Establishing a gateway to serve a plurality Home Network endpoints includes serving the endpoints through connection interfaces selected from the group including wireless, convention telephone line, AC power line, Ethernet transmission media, and dedicated hard line connections such as USB lines. Step 904 maintains a universal phone book accessible to the endpoints. Maintaining a universal phone book accessible to the endpoints includes using the gateway to maintain a centralized phone book. Further, the universal phone book is accessible to all of the plurality of endpoints. In some aspects of the method, the universal phone book is maintained in nonvolatile memory. Step 906 accesses the universal phone book from an endpoint. Step 907 displays at least a portion of the universal phone book at an endpoint.

In some aspects, establishing a gateway in Step 902 includes sub steps. Step 902a transceives calls on external communication medium that communicate call information in a first format selected from the group including voice over broadband (VoBB), as defined above, ISDN, and plain old telephone service (POTS). Step 902b converts between the first format and a digital Home Network format. Step 902c establishes traffic channels (in-band channels) to communicate information to the endpoints in the Home Network format. Step 902d establishes a control channel for communications with the universal phone book. Establishing a controi channel for communications with the universal phone book in Step 902d includes establishing an out-of-band control channel between the gateway and each endpoint accessing the universal phone book.

Some aspects of the method include further steps. Step 908 establishes a connection between an input/output (I/O) device and the gateway. Step 910, using the I/O device, edits universal phone book entries. Alternatively, in Step 910 the gateway establishes a control channel for communications between an endpoint and the universal phone book for the purpose of editing universal phone book entries from the endpoint. Step 912, using a printer associated with the I/O device, prints the universal phone book.

In some aspects, Step 909a establishes a security protocol for protecting the universal phone book editing function. Step 909b, prior to using the I/O device to edit universal phone book entries, passes the security protocol. Likewise, when the endpoint does the editing, Step 909a establishes a control channel security protocol for protecting the universal phone book editing function, and Step 909b, prior to using the endpoint to edit universal phone book entries, passes the control channel security protocol.

In some aspects of the method, maintaining a universal phone book accessible to the endpoints in Step 904 includes maintaining entries with telephone numbers paired to descriptors. Further, Step 904 maintains a universal phone book with entries cross-referenced to option categories. Then, accessing the universal phone book from the endpoint in Step 906 includes selecting an option category for the endpoint from a group of possible categories, as described above. Displaying entries in the universal phone book at the endpoint in Step 907 includes returning universal phone book entries cross-referenced to the selected option category.

In some aspects, accessing the universal phone book from the endpoint includes accessing the universal phone book from a first endpoint and automatically selecting an option category associated with the first endpoint. In other aspects, accessing the universal phone book from an endpoint includes selecting an option category, and selecting an entry. Then, displaying entries in the universal phone book at the endpoint includes locating the selected entry in the selected option category, and returning telephone number/descriptor pairs associated with the selected entry.

Some aspects of the method include further steps. Step 918 stores a local phone book of entries, with telephone number/descriptor pairs, at each endpoint. Step 920 accesses the local phone book. Typically, the local phone book is accessed in response to losing access to the universal phone book from an endpoint. In some aspects, the user may manually select the LPB even if the UPB is available. As with the UPB, storing a local phone book of entries in Step 918 can include storing entries cross-referenced to option categories such as full names, nicknames, user-defined groups, most recently called numbers, or most frequently called numbers. Then, accessing the endpoint local phone book in Step 920 includes selecting an option category. A further step, Step 922 displays entries in the endpoint local phone book cross-referenced to the selected option category.

In some aspects, Step 918a maintains a copy of each endpoint local phone book at the gateway. Step 918b, upon initialization of an endpoint, accesses the local phone book at the gateway. Step 918c downloads the local phone book to the endpoint and stores the downloaded local phone book at the endpoint.

In some aspects, Step 924 uses the I/O device to edit a local phone book stored at the gateway. Alternatively, Step 924 edits the local phone book stored at the gateway in response to commands selected from an endpoint user interface. In other aspects, Step 923a establishes a security protocol for editing the local phone book stored at the gateway. Step 923b, prior to editing the local phone book stored at the gateway, passes the security protocol. In some aspects, Step 926 stores a backup copy of the universal phone book at an endpoint, or the gateway.

In some aspects of the method, establishing a control channel for communications with the universal phone book in Step 902d includes communicating an out-of-band message, from an endpoint to the gateway, with an entry, and communicating an out-of-band message, from the gateway to the endpoint, returning telephone numbers paired to descriptors. For example, communicating an out-of-band message, from an endpoint to the gateway, includes communicating an entry fragment. Then, communicating an out-of-band message, from the gateway to the endpoint, includes selecting all entries including the entry fragment, andreturning telephone number/descriptor pairs associated with each selected entry.

In some aspects, communicating an out-of-band message, from the endpoint to the gateway, includes entering one entry character per out-of-band message. Then, communicating an out-of-band message, from the gateway to the first endpoint, includes refining the list of entries in response to each subsequently received character, and returning the refined list of telephone numbers paired to descriptors in every out-of-band message.

In some aspects, communicating an out-of-band message, from the endpoint to the gateway, includes specifying the endpoint memory capacity. Then, communicating an out-of-band message, from the gateway to the endpoint, includes returning a list telephone number/descriptor pairs whose size is responsive to the endpoint memory capacity.

In some aspects of the method, transceiving calls on external communication medium that communicate call information in a first format in Step 902a includes sub steps. Step 902a1 receives calling line ID (CLID) information for incoming calls. Step 902a2 identifies a telephone number for an incoming call, using the calling line ID information. Then, Step 903a uses the universal phone book to cross-reference the identified telephone number to a descriptor. Step 903b communicates the cross-referenced descriptor to the endpoint.

In some aspects, identifying a telephone number for an incoming call, using the calling line ID information in Step 902a2 includes the gateway decoding the calling line ID information. Alternatively, identifying a telephone number for an incoming call, using the calling line ID information, includes additional sub steps. Step 902a2a communicates the calling line ID information to an endpoint using an in-band message. Step 902a2b, at the endpoint, decodes the calling line ID information into an identified telephone number. Step 902a2c communicates the identified telephone number to the gateway in an out-of-band message. Then, using the universal phone book to cross-reference the identified telephone number to a descriptor in Step 903a includes using the telephone number identified by the endpoint.

A system and method for maintaining a Home Network universal phone book have been provided. A few examples have been given of how the phone book can be organized by entry and option category. Examples have also been given for the out-of-band signaling and VoHN protocol that could support such a phone book. However, other variations and embodiments of the invention will occur to those skilled in the art.

The invention being thus described, it will be obvious that the same may be varied in many ways. Such variations are not to be regarded as a departure from the spirit and scope of the invention, and all such modifications as would be obvious to one skilled in the art intended to be included within the scope of the following claims.

## Claims

1. In a Home Network telephone system, a method for maintaining a universal phone book, the method comprising:
establishing a gateway to serve a plurality Home Network endpoints; and,
maintaining a universal phone book accessible to the endpoints.

2. The method of claim 1 wherein establishing a gateway to serve a plurality Home Network endpoints includes serving the endpoints through connection interfaces selected from the group including wireless, convention telephone line, AC power line, Ethernet transmission media, and dedicated hard line connections.

3. The method of claim 2 further comprising:
accessing the universal phone book from an endpoint; and,
displaying entries from the universal phone book at the endpoint.

4. The method of claim 3 wherein establishing a gateway includes:
transceiving calls on external communication media that communicate call information in a first format;
converting between the first format and a digital Home Network format;
establishing traffic channels to communicate information to the endpoints in the Home Network format; and,
establishing a control channel for communications with the universal phone book.

5. The method of claim 4 wherein establishing a control channel for communications with the universal phone book includes establishing an out-of-band control channel between the gateway and each endpoint accessing the universal phone book.

6. The method of claim 5 wherein transceiving calls on external communication medium that communicate call information in a first format includes a first format selected from the group including voice over cable modem (VoCM), voice over DSL (VoDSL), voice over ATM (VoATM), voice over Internet Protocol (VoIP), fixed wireless access (FWA), or fibre to the home (FTTH), integrated services digital network (ISDN), and plain old telephone service (POTS).

7. The method of claim 5 wherein maintaining a universal phone book accessible to the endpoints includes using the gateway to maintain a centralized phone book.

8. The method of claim 7 wherein maintaining a universal phone book accessible to the endpoints includes maintaining a universal phone book accessible to all of the plurality of endpoints.

9. The method of claim 8 further comprising:
establishing a connection between an input/output (I/O) device and the gateway; and,
using the I/O device, editing universal phone book entries.

10. The method of claim 9 further comprising:
establishing a security protocol for protecting the universal phone book editing function; and,
prior to using the I/O device to edit universal phone book entries, passing the security protocol.

11. The method of claim 9 further comprising:
using a printer associated with the I/O device, printing the universal phone book.

12. The method of claim 8 wherein establishing a control channel for communications between an endpoint and the universal phone book includes editing universal phone book entries from the endpoint.

13. The method of claim 12 further comprising:
establishing a control channel security protocol for protecting the universal phone book editing function; and,
prior to using the endpoint to edit universal phone book entries, passing the control channel security protocol.

14. The method of claim 8 wherein maintaining a universal phone book accessible to the endpoints includes maintaining the universal phone book in nonvolatile memory.

15. The method of claim 8 wherein maintaining a universal phone book accessible to the endpoints includes maintaining entries with telephone numbers paired to descriptors.

16. The method of claim 15 wherein maintaining a universal phone book accessible to the endpoints includes maintaining a universal phone book with entries cross-referenced to option categories.

17. The method of claim 16 wherein accessing the universal phone book from the endpoint includes selecting an option category from the endpoint; and,
wherein displaying entries in the universal phone book at the endpoint includes returning universal phone book entries cross-referenced to the selected option category.

18. The method of claim 17 wherein selecting an option category includes selecting an option category selected from the group including user, endpoint, general, pre-defined, and user-dcfined.

19. The method of claim 18 wherein accessing the universal phone book from the endpoint includes:
accessing the universal phone book from a first endpoint; and,
automatically selecting an option category associated with the first endpoint.

20. The method of claim 18 wherein accessing the universal phone book from an endpoint includes:
selecting an option category;
selecting an entry;
wherein displaying entries in the universal phone book at the endpoint includes:
locating the selected entry in the selected option category; and,
returning telephone number/descriptor pairs associated with the selected entry.

21. The method of claim 8 further comprising:
storing a local phone book of entries, with telephone number/descriptor pairs, at each endpoint; and,
in response to losing access to the universal phone book from an endpoint, accessing the endpoint local phone book.

22. The method of claim 21 wherein storing a local phone book of entries includes storing entries cross-referenced to option categories.

23. The method of claim 21 wherein accessing the endpoint local phone book includes selecting an option category; and,
the method further comprising:
displaying entries in the endpoint local phone book cross-referenced to the selected option category.

24. The method of claim 23 wherein selecting an endpoint local phone book option category includes selecting a category from the group including user, endpoint, general, pre-defined, and user-defined.

25. The method of claim 21 further comprising:
maintaining a copy of each endpoint local phone book at the gateway.

26. The method of claim 25 further comprising:
upon initialization of an endpoint, accessing the local phone book at the gateway;
downloading the local phone book to the endpoint; and
storing the downloaded local phone book at the endpoint.

27. The method of claim 26 further comprising:
establishing a connection between an input/output (I/O) device and the gateway; and,
using the I/O device, editing a local phone book stored at the gateway.

28. The method of claim 27 further comprising:
editing the local phone book stored at the gateway in response to commands selected from an endpoint user interface.

29. The method of claim 28 further comprising:
establishing a security protocol for editing the local phone book stored at the gateway; and,
prior to editing the local phone book stored at the gateway, passing the security protocol.

30. The method of claim 15 wherein establishing a control channel for communications with the universal phone book includes:
communicating an out-of-band message, from an endpoint to the gateway, with an entry; and,
communicating an out-of-band message, from the gateway to the endpoint, returning telephone numbers paired to descriptors.

31. The method of claim 30 wherein communicating an out-of-band message, from an endpoint to the gateway, with a entry includes communicating an entry fragment;
wherein communicating an out-of-band message, from the gateway to the endpoint, returning telephone numbers paired to descriptors includes:
selecting all entries including the entry fragment; and,
returning telephone number/descriptor pairs associated with each selected entry.

32. The method of claim 30 wherein communicating an out-of-band message, from the endpoint to the gateway, with a entry includes entering one entry character per out-of-band message; and,
wherein communicating an out-of-band message, from the gateway to the endpoint, returning telephone numbers paired to descriptors includes:
relining the list of entries in response to each received character; and,
returning the refined list of telephone numbers paired to descriptors in every out-of-band message.

33. The method of claim 30 wherein communicating an out-of-band message, from the endpoint to the gateway, with an entry includes specifying the endpoint memory capacity; and,
wherein communicating an out-of-band message, from the gateway to the endpoint, returning telephone numbers paired to descriptors includes returning a list telephone number/descriptor pairs whose size is responsive to the endpoint memory capacity.

34. The method of claim 8 wherein transceiving calls on external communication medium that communicate call information in a first format includes:
receiving calling line ID (CLID) information for incoming calls;
identifying a telephone number for an incoming call, using the calling line ID information;
the method further comprising:
using the universal phone book to cross-reference the identified telephone number to a descriptor; and,
communicating the cross-referenced descriptor to the endpoint.

35. The method of claim 34 wherein identifying a telephone number for an incoming call, using the calling line ID information, includes the gateway decoding the calling line ID information.

36. The method of claim 34 wherein identifying a telephone number for on incoming call, using the calling line ID information, includes:
communicating the calling line ID information to an endpoint using in-band signalling;
at the endpoint, decoding the calling line ID information into an identified telephone number;
communicating the identified telephone number to the gateway in an out-of-band message; and
wherein using the universal phone book to cross-reference the identified telephone number to a descriptor includes using the telephone number identified by the endpoint.

37. The method of claim 1 further comprising:
storing a backup copy of the universal phone book at a first endpoint.

38. In a Home Network telephone system, a system for maintaining a universal phone book, the universal phone book system comprising:
a gateway having an input to transceive calls on external communication medium, the gateway maintaining an accessible universal phone book and supplying a communications bridge to an output; and,
a plurality of endpoints, each endpoint having a port connected to the gateway output for accessing the universal phone book.

39. The system of claim 38 wherein the endpoints are connected with the gateway using connection interfaces selected from the group including wireless, convention communication media, AC power line, Ethernet transmission media, and dedicated hard line connections.

40. The system of claim 39 wherein each endpoint includes a local interface for making universal phone book access entries and a display to depict entries from the universal phone book, in response to accessing the universal phone book.

41. The system of claim 40 wherein the gateway transceives calls on external communication medium that communicate call information in a first format, converts between the first format and a digital Home Network format, establishes traffic channels to communicate information to the endpoint communication devices in the Home Network format, and establishes a control channel for accessing the universal phone book from the endpoint communication devices.

42. The system of claim 41 wherein the gateway establishes an out-of-band control channel between the gateway and each endpoint communication device accessing the universal phone book.

43. The system of claim 42 wherein the gateway transceives calls on external communication medium that communicate call information in a first format selected from the group including voice over ATM (VoATM), voice over cable modem (VoCM), voice over DSL (VoDSL), voice over Internet protocol (VoIP), fixed wireless access (FWA), or fibre to the home (FTTH), integrated service digital network (ISDN), and plain old telephone service (POTS).

44. The system of claim 42 wherein the gateway maintains a universal phone book accessible to all of the plurality of endpoints.

45. The system of claim 44 wherein the gateway universal phone book stores each entry as a telephone number paired with a descriptor.

46. The system of claim 44 wherein the gateway includes a nonvolatile memory for storing the universal phone book.

47. The system of claim 44 wherein the gateway universal phone book cross-references a plurality of option categories to entries;
wherein an endpoint selects an option category; and,
wherein the gateway universal phone book provides access to the entries in the selected option category.

48. The system of claim 47 wherein the gateway universal phone book includes option categories being selected from the group including user, endpoint, general, pre-defined, and user-defined.

49. The system of claim 48 wherein a first endpoint requests access to the universal phone book; and,
wherein the gateway automatically provides access to entries in an option category associated from the first endpoint.

50. The system of claim 48 wherein a first endpoint selects an option category associated with a first user; and,
wherein the gateway provides access to entries in an option category associated with the first user.

51. The system of claim 44 w herein each endpoint includes a local phone book of entries.

52. The system of claim 51 wherein an endpoint accesses its local phone book in response to losing access to the gateway universal phone book.

53. The system of claim 51 wherein the endpoint local phone book stores each entry as a telephone number paired with a descriptor.

54. The system of claim 53 wherein the endpoint local phone book cross-references a plurality of option categories to entries, wherein the endpoint selects an option category and the local phone book provides access to the entries in the selected option category.

55. The system of claim 54 wherein the endpoint local phone book includes option categories being selected from the group including full names, nicknames, user-defined groups, groups defined by the endpoint accessing the universal phone book, most recent calls, most frequent calls, and categories defined by the external communication media selected.

56. The system of claim 51 wherein the gateway universal phone book includes a local phone book entity section;
wherein each endpoint transmits a copy of its local phone book to the gateway local phone book entity section; and,
wherein the gateway supplies the corresponding copy of the local phone book in response to a request from an endpoint.

57. The system of claim 51 wherein the gateway has an input/output (I/O) interface;
the system further comprising:
an input/output (I/O) device having an output connected to the gateway I/O interface for editing universal phone book entries.

58. The system of claim 57 wherein the gateway establishes a security protocol for enabling access to the universal phone book; and,
wherein the I/O device passes the gateway security protocol, prior to editing the universal phone book.

59. The system of claim 57 further comprising:
a printer having an input connected to the I/O device; and,
wherein the I/O device enables the printer to print universal phone book entries in response to communications with the gateway.

60. The system of claim 51 wherein an endpoint uses the control channel established by the gateway for editing universal phone book entries.

61. The system of claim 60 wherein the gateway establishes a control channel security protocol for editing the universal phone book; and,
wherein an endpoint passes the gateway security protocol prior to editing universal phone book entries.

62. The system of claim 44 wherein an endpoint communicates an out-of-band message to the gateway requesting access to an entry; and,
wherein the gateway communicates an out-of-band message returning entries having a telephone number paired to a descriptor.

63. The system of claim 62 wherein the endpoint communicates an entry fragment in an out-of-band message; and,
wherein the gateway selects all entries including the communicated entry fragment and returns telephone number/descriptor pairs associated with the selected entries in an out-of-band message.

64. The system of claim 62 wherein, the endpoint enters one entry character per out-of-band message; and,
wherein the gateway refines the list of entries in response to each received character and returns the refined list of telephone numbers paired to descriptors in every out-of-band message.

65. The system of claim 62 wherein the endpoint communicating an out-of-band message to the gateway specifying the endpoint memory capacity; and,
wherein the gateway communicating an out-of-band message with a list telephone number/descriptor pairs whose size is responsive to the endpoint memory capacity.

66. The system of claim 44 wherein the gateway receives calling line ID (CLID) information for incoming calls on the external communication medium, uses the universal phone book to cross-reference an identified telephone number to a descriptor, and communicates the cross-referenced descriptor to the endpoint communication device to which the incoming call is addressed.

67. The system of claim 66 wherein the gateway identifies a telephone number for an incoming call by decoding the calling line ID information.

68. The system of claim 66 wherein the gateway communicates the calling line ID information to an endpoint using in-band signaling;
wherein the endpoint decodes the calling line ID information into an identified telephone number and communicates the identified telephone number to the gateway; and,
wherein the gateway uses the universal phone book to cross-reference the identified telephone number to a descriptor and communicates the identified descriptor back to the endpoint.

69. The system of claim 44 wherein the plurality of endpoints are selected from the group including telephones, fax machines, multifunction peripherals (MFPs), video-telephones, computers, wireless devices, and hardwired devices.

70. The system of claim 44 wherein an endpoint includes a backup memory for saving an emergency copy of the universal phone book; and,
wherein the gateway transmits a copy of the universal phone book to the endpoint backup memory.
